# EUROPEAN PATENT SPECIFICATION

(11) **EP 3 244 691 B1**
(45) Date of publication and mention of the grant of the patent: **23.10.2019**
(21) Application number: 17170397.8
(22) Date of filing: 10.05.2017
(51) Int. Cl.: H04W 48/16, H04W 76/27, H04W 48/02, H04W 48/12

(54) **DEVICE HANDLING A RADIO RESOURCE CONTROL CONNECTION RESUME PROCEDURE**
VORRICHTUNG ZUR HANDHABUNG EINES WIEDERAUFNAHMEVERFAHRENS EINER FUNKRESSOURCENSTEUERUNGSVERBINDUNG
DISPOSITIF DE GESTION DE PROCÉDURE DE REPRISE DE CONNEXION DE COMMANDE DE RESSOURCE RADIO

(30) Priority: 13.05.2016 US 201662335684 P; 28.04.2017 US 201715499912
(43) Date of publication of application: 15.11.2017
(73) Proprietor: HTC Corporation, Taoyuan City 330 (TW)
(72) Inventor: Chen, Te-Ming, Taoyuan City 330 (TW)
(74) Representative: Murgitroyd & Company

(56) References cited:
- "Universal Mobile Telecommunications System (UMTS); LTE; Non-Access-Stratum (NAS) protocol for Evolved Packet System (EPS); Stage 3 (3GPP TS 24.301 version 13.5.0 Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 1, no. V13.5.0, 1 April 2016 (2016-04-01), XP014274258,
- "3rd Generation Partnership Project; Technical Specification Group Services and System Aspects; Study on architecture enhancements for Cellular Internet of Things (Release 13)", 3GPP DRAFT; 23720-D00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 24 March 2016 (2016-03-24), XP051086108, Retrieved from the Internet: URL:http://www.3gpp.org/ftp/tsg_sa/WG2_Arc h/Latest_SA2_Specs/Rel-13/ [retrieved on 2016-03-24]
- "3rd Generation Partnership Project; Technical Specification Group Radio Access Network; Evolved Universal Terrestrial Radio Access (E-UTRA); Radio Resource Control (RRC); Protocol specification (Release 13)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V13.1.0, 1 April 2016 (2016-04-01), pages 1-551, XP051088537, [retrieved on 2016-04-01]
- ERICSSON ET AL: "Review issue list for NB-IoT first round ASN.1 and RRC review", 3GPP DRAFT; R2-163232 REVIEW ISSUE LIST FOR NB-IOT FIRST ROUND ASN 1 AND RRC REVIEW, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Sophia Antipolis, France; 20160503 - 20160504 2 May 2016 (2016-05-02), XP051095121, Retrieved from the Internet: URL:http://www.3gpp.org/ftp/tsg_ran/WG2_RL 2/TSGR2_AHs/2016_05_LTE_NB_IoT/Docs/ [retrieved on 2016-05-02]
- HUAWEI (RAPPORTEUR): "36.331 Running CR to capture agreements on NB-IoT", 3GPP DRAFT; R2-163054-36331_RUNNING_CR_ALL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Dubrovnik, Croatia; 20160411 - 20160415 14 April 2016 (2016-04-14), XP051098991, Retrieved from the Internet: URL:http://www.3gpp.org/ftp/Meetings_3GPP_ SYNC/RAN2/Docs/ [retrieved on 2016-04-14]

## Description

### Background of the Invention

### 1. Field of the Invention

The present invention relates to a device used in a wireless communication system, and more particularly, to a device of handling a radio resource control connection resume procedure.

### 2. Description of the Prior Art

A long-term evolution (LTE) system provides high data rate, low latency, packet optimization, and improved system capacity and improved coverage. The LTE system is evolved continuously to increase peak data rate and throughput by using advanced techniques, such as carrier aggregation (CA), dual connectivity, licensed-assisted access, etc. In the LTE system, a radio access network known as an evolved universal terrestrial radio access network (E-UTRAN) includes at least one evolved Node-B (eNB) for communicating with at least one user equipment (UE), and for communicating with a core network. The core network may include a mobility management and a Quality of Service (QoS) control of the at least one UE.

If a radio resource control (RRC) connection resume fails (i.e., is not performed successfully), a RRC layer of a UE does not release a resume UE context and an evolved packet system (EPS) mobility management (EMM) layer of the UE may enter a wrong state. Accordingly, the EMM layer cannot request the RRC layer to resume the RRC connection, before it receiving another suspend indication. Thus, how to handle a RRC connection resume failure is an important problem to be solved.

The following documents may be regarded as background art useful for understanding the invention:
Universal Mobile Telecommunications System (UMTS); LTE; Non-Access-Stratum (NAS) protocol for Evolved Packet System (EPS); Stage 3 (3GPP TS 24.301 version 13.5.0 Release 13)
3rd Generation Partnership Project (3GPP) TR 23.720 V13.0.0, (Release 13);
Technical Specification Group Services and System Aspects; Study on architecture enhancements for Cellular Internet of Things;
3rd Generation Partnership Project (3GPP) TS 36.331, (Release 13);; Technical Specification Group Radio Access Network; Evolved Universal Terrestrial Radio Access (E-UTRA); Radio Resource Control (RRC); Protocol specification
Ericsson, Huawei, HiSilicon, Neul: 3GPP TSG-RAN2 NB-loT, R2-163232, Review issue list for NB-loT first round ASN.1 and RRC review, Sophia Antipolis, France, 3rd - 4th May 2016; and
Huawei: 3GPP TSG-RAN 36.331, WG2#93BIS Meeting, R2-163054 Running CR to capture agreements on NB-loT, Dubrovnik, Croatia, April 11 - 15, 2016.

### Summary of the Invention

It is an object of an embodiment of the present invention to provide a communication device for handling a RRC connection resume procedure selection to solve the abovementioned problem. This object can be achieved by the features as defined in the independent claims.

According to one embodiment, a communication device for handling a radio resource control (RRC) connection resume procedure comprises a storage unit for storing instructions and a processing circuit coupled to the storage unit. The processing circuit is configured to execute the instructions stored in the storage unit. The instructions comprise: receiving, by a RRC layer of the communication device, a first RRC connection resume request from an evolved packet system, EPS, mobility management, EMM, layer of the communication device; performing, by the RRC layer of the communication device, an access barring check to detect whether an access to a serving cell of the communication device is barred or the access to a serving cell of the communication device is not barred; after detecting that the access to the serving cell of the communication device is barred, the RRC layer of the communication device is further configured for: not releasing a resume UE context and a resumeldentity; informing the EMM layer of the communication device that a RRC connection resume failure occurs, the access to the serving cell is barred, and the resume UE context and/or the resumeldentity is available; and entering, by the EMM layer of the communication device, an EMM-IDLE mode with suspend indication.

According to one embodiment, a communication device for handling a radio resource control (RRC) connection resume procedure comprises a storage unit for storing instructions and a processing circuit coupled to the storage unit. The processing circuit is configured to execute the instructions stored in the storage unit. The instructions comprise: receiving, by a RRC layer of the communication device, a first RRC connection resume request from an evolved packet system, EPS, mobility management, EMM, layer of the communication device; performing, by the RRC layer of the communication device, an access barring check to detect whether an access to a serving cell of the communication device is barred or the access to a serving cell of the communication device is not barred; after detecting that the access to the serving cell of the communication device is not barred, the RRC layer of the communication device is further configured for: transmitting a second RRC connection resume request message to a network and starting a timer; the communication device is characterised by the following alternatives A or B: A) not releasing, by the RRC layer of the communication device, a resume UE context and a resumeldentity, after the timer is expired; informing, by the RRC layer of the communication device, the EMM layer of the communication device that a RRC connection resume fails, and the resume UE context and/or the resumeldentity is available; and entering, by the EMM layer of the communication device, an EMM-IDLE mode with suspend indication; or B) not releasing, by the RRC layer of the communication device, a resume UE context and the resumeldentity if a RRC connection reject message includes rrc-Suspendlndication, after receiving the RRC connection reject message from the network and before the timer is expired; informing, by the RRC layer of the communication device, the EMM layer of the communication device that a RRC connection resume fails and the resume UE context and/or the resumeldentity is available; and entering, by the RRC layer of the communication device, an EMM-IDLE mode with suspend indication.

### Brief Description of the Drawings

The accompanying drawings illustrate presently exemplary embodiments of the disclosure and serve to explain, by way of example, the principles of the disclosure.
Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.

### Detailed Description

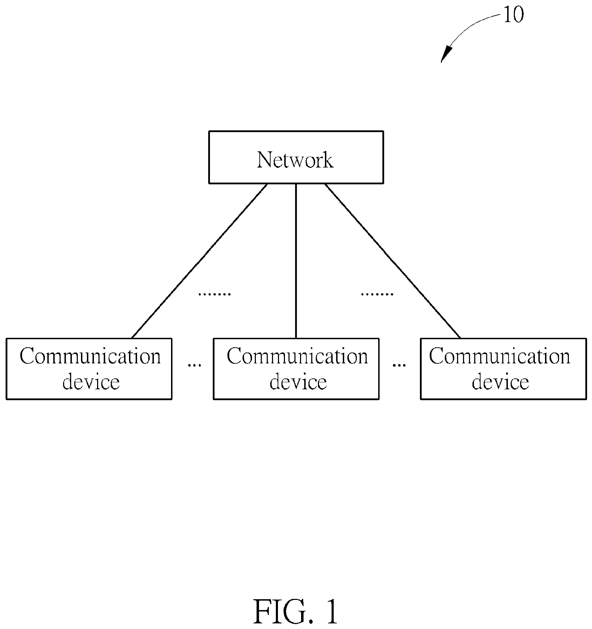

Fig. 1 is a schematic diagram of a wireless communication system 10 according to an example of the present invention. The wireless communication system 10 is briefly composed of a network and a plurality of communication devices. The network and a communication device may communicate with each other via one or more carriers of licensed band(s) and/or unlicensed band(s). The network and the communication device may simultaneously communicate with each other via multiple cells (e.g., multiple carriers) including a primary cell (PCell) and one or more secondary cells (SCells). The abovementioned cells may be operated in the same or different frame structure types, or in the same or different duplexing modes, i.e. frequency-division duplexing (FDD) and time-division duplexing (TDD). For example, the PCell may be operated on a licensed carrier, while the SCell may be operated on an unlicensed carrier.

In Fig. 1, the network and the communication devices are simply utilized for illustrating the structure of the wireless communication system 10. Practically, the network may be a narrowband (NB) internet of things (loT) network or an evolved universal terrestrial radio access network (E-UTRAN) including at least one evolved Node-B (eNB). The network may be a fifth generation (5G) network including at least one 5G base station (BS) which employs orthogonal frequency-division multiplexing (OFDM) and/or non-OFDM and a transmission time interval (TTI) shorter than 1ms (e.g. 100 or 200 microseconds), to communicate with the communication devices. In general, a BS may also be used to refer any of the eNB and the 5G BS.

Furthermore, the network may also include the GERAN/UTRAN/E-UTRAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), etc. The GERAN is an abbreviation of Global System for Mobile Communications (GSM) Enhanced Data rates for GSM Evolution (EDGE) Radio Access Network. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information may be processed by both the UTRAN/E-UTRAN and the core network, and the decisions are made after coordination and/or cooperation are performed by the UTRAN/E-UTRAN and the core network.

A communication device may be a user equipment (UE), a machine type communication (MTC) device, a mobile phone, a laptop, a tablet computer, an electronic book, a portable computer system, a vehicle, or an aircraft. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

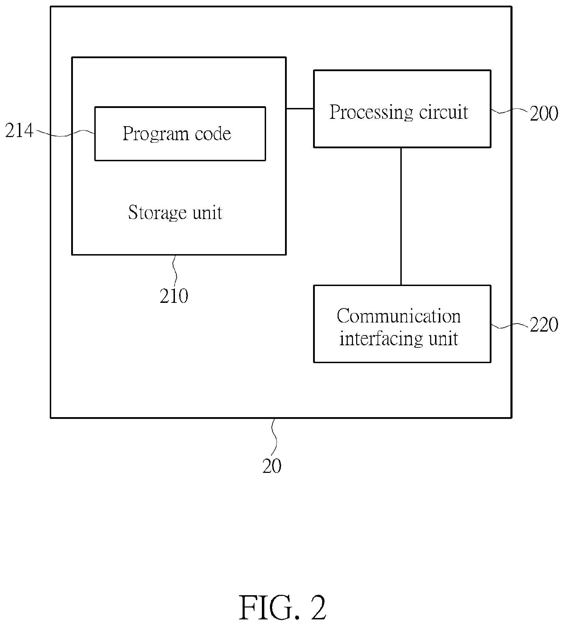

Fig. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage unit 210 and a communication interfacing unit 220. The storage unit 210 may be any data storage device that may store a program code 214, accessed and executed by the processing circuit 200. Examples of the storage unit 210 include but are not limited to a subscriber identity module (SIM), read-only memory (ROM), flash memory, random-access memory (RAM), hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing circuit 200.

In the following embodiments, a UE is used for representing a communication device in Fig. 1, to simplify the illustration of the embodiments.

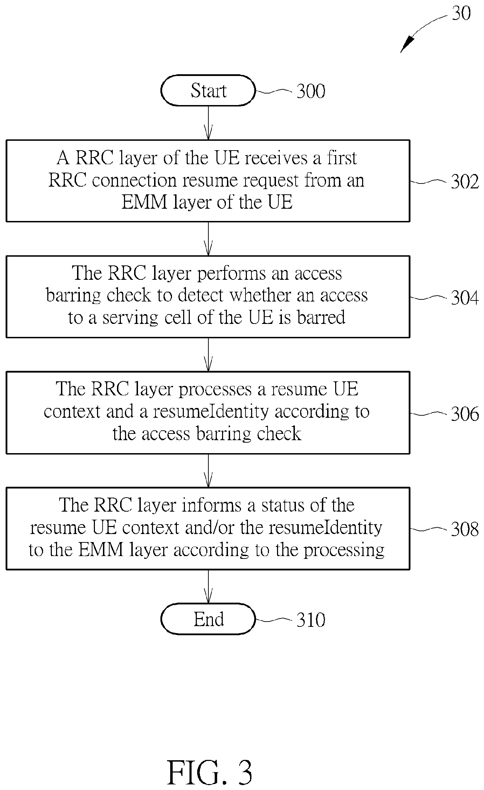

Fig. 3 is a flowchart of a process 30 according to an example of the present invention. The process 30 is utilized in a UE, to handle a radio resource control (RRC) connection resume procedure. The process 30 includes the following steps:
Step 300: Start.
Step 302: A RRC layer of the UE receives a first RRC connection resume request from an evolved packet system (EPS) mobility management (EMM) layer of the UE.
Step 304: The RRC layer performs an access barring check to detect whether an access to a serving cell of the UE is barred.
Step 306: The RRC layer processes a resume UE context and a resumeldentity according to the access barring check.
Step 308: The RRC layer informs a status of the resume UE context and/or the resumeldentity to the EMM layer according to the processing.
Step 310: End.

The RRC layer (i.e., UE RRC) in a RRC_CONNECTED mode receives a RRC connection release message from a network. The RRC connection release message includes a resumeldentity and a release cause, and the release cause is rrcSuspend. After receiving the RRC connection release message, the RRC layer stores the resumeldentity and resume UE context and informs (e.g., by transmitting a RRC connection suspend indication) the EMM layer (i.e., UE EMM) that a RRC connection is suspended and the RRC enters a RRC_ILDE mode. After receiving the RRC connection suspend indication from the RRC layer, the EMM layer enters a EMM-IDLE with suspend indication. The EMM layer in the EMM-ILDE with suspend indication intends to transmit an initial NAS message to the network, and requests the RRC layer to perform a RRC connection resume procedure.

According to the process 30, a RRC layer of the UE receives a first RRC connection resume request from an EMM layer of the UE. Then, the RRC layer performs an access barring check to detect whether an access to a serving cell of the UE is barred. The RRC layer processes a resume UE context and a resumeldentity according to the access barring check. The RRC layer informs a status of the resume UE context and/or the resumeldentity to the EMM layer according to the processing. That is, the status of the resume UE context and/or the resumeldentity is informed to the EMM layer (e.g., via a bit "0" or "1"), such that the EMM layer can perform correct operations according to the status of the resume UE context and/or the resumeldentity, e.g., whether the resume UE context and/or the resumeldentity is available. Thus, problem in the art regarding the RRC connection resume failure is solved.

Realization of the process 30 is not limited to the above description. An example of the channel access procedure is described as follows.

In one example, the RRC layer does not release the resume UE context and the resumeldentity, after detecting that the access to the serving cell is barred. In addition, the RRC layer informs the EMM layer that a RRC connection resume failure occurs, informs the EMM layer that the access to the serving cell is barred, and informs the EMM layer that the resume UE context and/or the resumeldentity is available. Further, the EMM layer may enter an EMM-IDLE with suspend indication.

In another example, the RRC layer transmits a second RRC connection resume request message to a network and starting a timer (e.g., T300), after detecting that the access to the serving cell is not barred. Five examples are described as follows to illustrate the cases that the serving cell is not barred.

In one example, the RRC layer does not release the resume UE context and the resumeldentity, after the timer is expired. In addition, the RRC layer informs the EMM layer that a RRC connection resume fails, and informs the EMM layer that the resume UE context and/or the resumeldentity is available. Further, the EMM layer may enter an EMM-IDLE with suspend indication.

In one example, the RRC layer releases the resume UE context and the resumeldentity if a RRC connection reject message does not include rrc-Suspendlndication, after receiving the RRC connection reject message from the network and before the timer is expired. In addition, the RRC layer informs the EMM layer that a RRC connection resume fails, and informs the EMM layer that the resume UE context and/or the resumeldentity is not available. Further, the EMM layer may enter an EMM-IDLE without suspend indication.

In one example, the RRC layer does not release the resume UE context and the resumeldentity if a RRC connection reject message includes rrc-Suspendlndication, after receiving the RRC connection reject message from the network and before the timer is expired. In addition, the RRC layer informs the EMM layer that a RRC connection resume fails, and informs the EMM layer that the resume UE context and/or the resumeldentity is available. Further, the EMM layer may enter an EMM-IDLE with suspend indication.

In one example, the RRC layer releases the resume UE context and the resumeldentity, after receiving a RRC connection setup message from the network and before the timer is expired. In addition, the RRC layer informs the EMM layer that a RRC connection resume failure occurs and informs the EMM layer that the resume UE context and/or the resumeldentity is not available, and/or informs the EMM layer that a RRC connection establishment successes. Further, the EMM layer may enter an EMM-CONNECTED.

In one example, the RRC layer release the resume UE context and the resumeldentity, after receiving a RRC connection resume message from the network and before the timer is expired. In addition, the RRC layer informs the EMM layer that a RRC connection resume successes and informs the EMM layer that the resume UE context and/or the resumeldentity is not available.

In one example, the RRC layer generates a RRC connection resume failure indication comprising a field, and transmits the RRC connection resume failure indication to the EMM layer. The field indicates the EMM layer to enter an EMM-IDLE with suspend indication, an EMM-IDLE without suspend indication or an EMM-CONNECTED.

In one example, the RRC layer generates a RRC connection resume failure indication comprising a first field and a second field, and transmits the RRC connection resume failure indication to the EMM layer. The first field indicates whether the resume UE context and the resumeldentity are available, and the second field indicates whether a RRC connection establishment successes.

For example, the first field is set to "TRUE" for indicating that the resume UE context and the resumeldentity are available, and is set to "FALSE" for indicating that the resume UE context and the resumeldentity are not available. The second field is set to "TRUE" for indicating that the RRC connection establishment success, and is set to "FALSE" for indicating that the RRC connection establishment fails. For example, the RRC layer includes the first field in the RRC connection resume failure indication to indicate that the resume UE context and the resumeldentity are available, and does not include the first field in the RRC connection resume failure indication to indicate that the resume UE context and the resumeldentity are not available. The RRC layer includes the second field in the RRC connection resume failure indication to indicate that the RRC connection establishment success, and does not include the second field to indicate that the RRC connection establishment fails.

In one example, the RRC layer generates a RRC connection resume failure indication and an indication comprising a field, and transmits the RRC connection resume failure indication and the indication to the EMM layer. The field indicates the EMM layer to enter an EMM-IDLE with suspend indication, an EMM-IDLE without suspend indication or an EMM-CONNECTED.

In one example, the RRC layer generates a RRC connection resume failure indication and an indication comprising a first field and a second field, and transmits the RRC connection resume failure indication and the indication to the EMM layer. The first field indicates whether the resume UE context and the resumeldentity are available, and the second field indicates whether a RRC connection establishment successes.

For example, the first field is set to "TRUE" for indicating that the resume UE context and the resumeldentity are available, and is set to "FALSE" for indicating that the resume UE context and the resumeldentity are not available. The second field is set to "TRUE" for indicating that the RRC connection establishment success, and is set to "FALSE" for indicating that the RRC connection establishment fails. For example, the RRC layer includes the first field in the RRC connection resume failure indication to indicate that the resume UE context and the resumeldentity are available, and does not include the first field in the RRC connection resume failure indication to indicate that the resume UE context and the resumeldentity are not available. The RRC layer includes the second field in the RRC connection resume failure indication to indicate that the RRC connection establishment success, and does not include the second field to indicate that the RRC connection establishment fails.

In one example, the RRC layer generates a RRC connection resume failure indication with a type corresponding to whether the resume UE context and the resumeldentity are available, and transmits a RRC connection resume failure indication and the indication to the EMM layer.

For example, when the resume UE context and the resumeldentity are available, the RRC layer transmits a RRC connection resume failure indication with type 1 to the EMM layer, e.g., RRC connection resume internal failure indication. When the resume UE context and the resumeldentity are not available, the RRC layer transmits a RRC connection resume failure indication with type 2 to the EMM layer, e.g., RRC connection resume rejected by network failure indication. When a RRC connection setup is transmitted in response to a RRC connection resume request message, the RRC layer transmits a RRC connection resume failure indication with type 3 to the EMM layer, e.g., RRC connection resume failure and setup success indication.

In one example, the RRC layer transmits a first indication and a second indication to the EMM layer, after receiving a RRC connection setup message from the network in response to a RRC connection resume request message and before the timer is expired, wherein the first indication is a RRC connection resume failure indication and the second indication is a RRC connection establishment success indication.

In one example, the initial NAS message mentioned previously is an ATTACH REQUEST message, a DETACH REQUEST message, a TRACKING AREA UPDATE REQUEST message, a SERVICE REQUEST message or an EXTENDED SERVICE REQUEST message.

In one example, the EMM layer requests the RRC layer to release the resume UE context and resumeldentity, after receiving a RRC connection resume failure indication from the RRC layer.

It should be noted that a situation where a RRC connection resume fails and a new RRC connection is established successfully may be turned as "fallback". "RRC connection resume requests" transmitted from an EMM layer to a RRC layer and from the RRC layer to a network may be different. Thus, the term of "RRC connection resume request" is used for representing the transmission (or notification) from the EMM layer to the RRC layer, and the term of "RRC connection resume request message" is used for representing the transmission (or notification) from the RRC layer to the network.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20. Any of the above processes and examples above may be compiled into the program code 214.

To sum up, the present invention provides a communication device for handling a RRC connection resume failure. A status of a resume UE context and/or a resumeldentity is informed to an EMM layer, such that the EMM layer can perform correct operations according to the status of the resume UE context and/or the resumeldentity. Thus, problem in the art regarding the RRC connection resume failure is solved.

## Claims

1. A communication device for handling a radio resource control, RRC, connection resume procedure, comprising:
a storage unit (210), for storing instructions; and
a processing circuit (200), coupled to the storage unit (210), wherein the storage unit (210) stores, and the processing circuit (200) is configured to execute, the instructions of:
receiving, by a RRC layer of the communication device, a first RRC connection resume request from an evolved packet system, EPS, mobility management, EMM, layer of the communication device;
performing, by the RRC layer of the communication device, an access barring check to detect whether an access to a serving cell of the communication device is barred or the access to a serving cell of the communication device is not barred;
after detecting that the access to the serving cell of the communication device is barred, the RRC layer of the communication device is further configured for:
not releasing a resume UE context and a resumeldentity;
informing the EMM layer of the communication device that a RRC connection resume failure occurs, the access to the serving cell is barred, and the resume UE context and/or the resumeldentity is available; and
entering, by the EMM layer of the communication device, an EMM-IDLE mode with suspend indication.

2. A communication device for handling a radio resource control, RRC, connection resume procedure, comprising:
a storage unit (210), for storing instructions; and
a processing circuit (200), coupled to the storage unit (210), wherein the storage unit (210) stores, and the processing circuit (200) is configured to execute, the instructions of:
receiving, by a RRC layer of the communication device, a first RRC connection resume request from an evolved packet system, EPS, mobility management, EMM, layer of the communication device;
performing, by the RRC layer of the communication device, an access barring check to detect whether an access to a serving cell of the communication device is barred or the access to the serving cell of the communication device is not barred;
after detecting that the access to the serving cell of the communication device is not barred, the RRC layer of the communication device is further configured for:
transmitting a second RRC connection resume request message to a network and starting a timer;the communication device is **characterised by** the following alternatives A or B:
A) not releasing, by the RRC layer of the communication device, a resume UE context and a resumeldentity, after the timer is expired;
informing, by the RRC layer of the communication device, the EMM layer of the communication device that a RRC connection resume fails, and the resume UE context and/or the resumeldentity is available; and
entering, by the EMM layer of the communication device, an EMM-IDLE mode with suspend indication; or
B) not releasing, by the RRC layer of the communication device, a resume UE context and the resumeldentity if a RRC connection reject message includes rrc-Suspendlndication, after receiving the RRC connection reject message from the network and before the timer is expired;
informing, by the RRC layer of the communication device, the EMM layer of the communication device that a RRC connection resume fails and the resume UE context and/or the resumeldentity is available; and
entering, by the RRC layer of the communication device, an EMM-IDLE mode with suspend indication.

## Patentansprüche

1. Eine Kommunikationsvorrichtung zum Handhaben einer Funkressourcensteuerungs(RRC)-Verbindungswiederaufnahmeprozedur, beinhaltend:
eine Speichereinheit (210) zum Speichern von Anweisungen; und
eine Verarbeitungsschaltung (200), die mit der Speichereinheit (210) gekoppelt ist,
wobei die Speichereinheit (210) die folgenden Anweisungen speichert und die Verarbeitungsschaltung (200) konfiguriert ist, um diese auszuführen:
Empfangen, durch eine RRC-Schicht der Kommunikationsvorrichtung, einer ersten RRC-Verbindungswiederaufnahmeanforderung von einer weiterentwickelten Paketsystem(EPS)-Mobilitätsmanagement(EMM)-Schicht der Kommunikationsvorrichtung;
Durchführen, durch die RRC-Schicht der Kommunikationsvorrichtung, einer Zugriffssperrüberprüfung, um festzustellen, ob ein Zugriff auf eine bedienende Zelle der Kommunikationsvorrichtung gesperrt ist oder der Zugriff auf eine bedienende Zelle der Kommunikationsvorrichtung nicht gesperrt ist;
nach dem Festellen, dass der Zugriff auf die bedienende Zelle der Kommunikationsvorrichtung gesperrt ist, ist die RRC-Schicht der Kommunikationsvorrichtung ferner für Folgendes konfiguriert:
Nicht-Freigeben eines Wiederaufnahme-UE-Kontexts und einer Wiederaufnahmeidentität (Resumeldentity);
Informieren der EMM-Schicht der Kommunikationsvorrichtung darüber, dass ein RRC-Verbindungswiederaufnahmefehler auftritt, der Zugriff auf die bedienende Zelle gesperrt ist und der UE-Kontext und/oder die Wiederaufnahmeidentität verfügbar ist; und
Eingeben, durch die EMM-Schicht der Kommunikationsvorrichtung, eines EMM-IDLE-Modus mit Suspend-Angabe.

2. Eine Kommunikationsvorrichtung zum Handhaben einer Funkressourcensteuerungs(RRC)-Verbindungswiederaufnahmeprozedur, beinhaltend:
eine Speichereinheit (210) zum Speichern von Anweisungen; und
eine Verarbeitungsschaltung (200), die mit der Speichereinheit (210) gekoppelt ist,
wobei die Speichereinheit (210) die folgenden Anweisungen speichert und die Verarbeitungsschaltung (200) konfiguriert ist, um diese auszuführen:
Empfangen, durch eine RRC-Schicht der Kommunikationsvorrichtung, einer ersten RRC-Verbindungswiederaufnahmeanforderung von einer weiterentwickelten Paketsystem(EPS)-Mobilitätsmanagement(EMM)-Schicht der Kommunikationsvorrichtung;
Durchführen, durch die RRC-Schicht der Kommunikationsvorrichtung, einer Zugriffssperrüberprüfung, um festzustellen, ob ein Zugriff auf eine bedienende Zelle der Kommunikationsvorrichtung gesperrt ist oder der Zugriff auf die bedienende Zelle der Kommunikationsvorrichtung nicht gesperrt ist;
nach dem Feststellen, dass der Zugriff auf die bedienende Zelle der Kommunikationsvorrichtung nicht gesperrt ist, wird die RRC-Schicht der Kommunikationsvorrichtung ferner für Folgendes konfiguriert:
Übertragen einer zweiten RRC-Verbindungswiederaufnahmeanforderungsnachricht an ein Netzwerk und Starten eines Zeitgebers; wobei die Kommunikationsvorrichtung durch die folgende Alternativen A oder B gekennzeichnet ist:
A) Nicht-Freigeben, durch die RRC-Schicht der Kommunikationsvorrichtung, eines Wiederaufnahme-UE-Kontexts und einer Wiederaufnahmeidentität (Resumeldentity) nach Ablauf des Zeitgebers;
Informieren, durch die RRC-Schicht der Kommunikationsvorrichtung, der EMM-Schicht der Kommunikationsvorrichtung darüber, dass eine RRC-Verbindungswiederaufnahme fehlschlägt und der Wiederaufnahme-UE-Kontext und/oder die Wiederaufnahmeidentität verfügbar ist; und
Eingeben, durch die EMM-Schicht der Kommunikationsvorrichtung, eines EMM-IDLE-Modus mit Suspend-Angabe; oder
B) Nicht-Freigeben, durch die RRC-Schicht der Kommunikationsvorrichtung, eines Wiederaufnahme-UE-Kontexts und der Wiederaufnahmeldentität, wenn eine RRC-Verbindungsablehnungsnachricht eine rrc-SuspendAngabe (rrc-SuspendIndication) umfasst, nachdem die RRC-Verbindungsablehnungsnachricht von dem Netzwerk empfangen wurde und bevor der Zeitgeber abgelaufen ist;
Informieren, durch die RRC-Schicht der Kommunikationsvorrichtung, der EMM-Schicht der Kommunikationsvorrichtung darüber, dass eine RRC-Verbindungswiederaufnahme fehlschlägt und der Wiederaufnahme-UE-Kontext und/oder die Wiederaufnahmeidentität verfügbar ist; und
Eingeben, durch die RRC-Schicht der Kommunikationsvorrichtung, eines EMM-IDLE-Modus mit Suspend-Angabe.

## Revendications

1. Un dispositif de communication pour gérer une procédure de reprise de connexion de contrôle de ressources radio, RCC, comprenant :
une unité de stockage (210), pour stocker des instructions ; et
un circuit de traitement (200), couplé à l'unité de stockage (210), l'unité de stockage (210) stockant, et le circuit de traitement (200) étant configuré pour exécuter, les instructions consistant à :
recevoir, par une couche RCC du dispositif de communication, une première demande de reprise de connexion RRC d'une couche de gestion de la mobilité, EMM, de système de paquets évolué, EPS, du dispositif de communication ;
effectuer, par la couche RRC du dispositif de communication, une vérification d'interdiction d'accès pour détecter si un accès à une cellule en service du dispositif de communication est interdit ou si l'accès à une cellule en service du dispositif de communication n'est pas interdit ;
après avoir détecté que l'accès à la cellule en service du dispositif de communication était interdit, la couche RRC du dispositif de communication est en outre configuré pour :
ne pas libérer un contexte UE de reprise et une identité de reprise ;
informer la couche EMM du dispositif de communication qu'un échec de reprise de connexion RRC se produit, l'accès à la cellule en service est interdit, et le contexte UE de reprise et/ou l'identité de reprise est disponible ; et
entrer, par la couche EMM du dispositif de communication, dans un mode EMM-IDLE avec une indication de suspension.

2. Un dispositif de communication pour gérer une procédure de reprise de connexion de contrôle de ressources radio, RCC, comprenant :
une unité de stockage (210), pour stocker des instructions ; et
un circuit de traitement (200), couplé à l'unité de stockage (210), l'unité de stockage (210) stockant, et le circuit de traitement (200) étant configuré pour exécuter, les instructions consistant à :
recevoir, par une couche RCC du dispositif de communication, une première demande de reprise de connexion RRC d'une couche de gestion de la mobilité, EMM, de système de paquets évolué, EPS, du dispositif de communication ;
effectuer, par la couche RRC du dispositif de communication, une vérification d'interdiction d'accès pour détecter si un accès à une cellule en service du dispositif de communication est interdit ou si l'accès à la cellule en service du dispositif de communication n'est pas interdit ;
après avoir détecté que l'accès à la cellule en service du dispositif de communication n'était pas interdit, la couche RRC du dispositif de communication est en outre configurée pour : transmettre un deuxième message de demande de reprise de connexion RRC à un réseau et démarrer un minuteur ; le dispositif de communication est **caractérisé par** les variantes suivantes A ou B :
A) ne pas libérer, par la couche RRC du dispositif de communication, un contexte UE de reprise et une identité de reprise, après que le minuteur a expiré ; informer, par la couche RRC du dispositif de communication, la couche EMM du dispositif de communication qu'une reprise de connexion RRC échoue, et le contexte UE de reprise et/ou l'identité de reprise est disponible ; et
entrer, par la couche EMM du dispositif de communication, dans un mode EMM-IDLE avec une indication de suspension ; ou
B) ne pas libérer, par la couche RRC du dispositif de communication, un contexte UE de reprise et une identité de reprise si un message de rejet de connexion RRC inclut une indication de suspension rrc, après avoir reçu le message de rejet de connexion RRC du réseau et avant que le minuteur ait expiré ;
informer, par la couche RRC du dispositif de communication, la couche EMM du dispositif de communication qu'une reprise de connexion RRC échoue et le contexte UE de reprise et/ou l'identité de reprise est disponible ; et
entrer, par la couche RRC du dispositif de communication, dans un mode EMM-IDLE avec une indication de suspension.
